(19) Europäisches Patentamt
European Patent Office
Office européen des brevets

(11) **EP 3 465 197 B1**

(12) **FASCICULE DE BREVET EUROPEEN**

(45) Date de publication et mention de la délivrance du brevet:
**01.04.2020 Bulletin 2020/14**

(51) Int Cl.:
*G01N 29/06* (2006.01)  *G01N 29/07* (2006.01)
*G01N 29/11* (2006.01)  *G01N 29/265* (2006.01)
*G01N 29/30* (2006.01)  *G01N 29/44* (2006.01)
*G01N 29/48* (2006.01)

(21) Numéro de dépôt: **17732500.8**

(22) Date de dépôt: **24.05.2017**

(86) Numéro de dépôt international:
**PCT/FR2017/051282**

(87) Numéro de publication internationale:
**WO 2017/203166 (30.11.2017 Gazette 2017/48)**

(54) **PROCÉDÉ DE DÉTECTION PAR ULTRASONS DE DÉFAUTS DANS UN MATÉRIAU**

VERFAHREN ZUR DETEKTION VON DEFEKTEN IN EINEM MATERIAL MITTELS ULTRASCHALL

METHOD FOR DETECTING DEFECTS IN A MATERIAL BY ULTRASOUND

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.05.2016 FR 1654708**

(43) Date de publication de la demande:
**10.04.2019 Bulletin 2019/15**

(73) Titulaire: **Electricité de France**
**75008 Paris (FR)**

(72) Inventeurs:
• **PAUL, Nicolas**
**93100 Montreuil (FR)**
• **KASSIS, Paul**
**75017 Paris (FR)**

(74) Mandataire: **Regimbeau**
**20, rue de Chazelles**
**75847 Paris Cedex 17 (FR)**

(56) Documents cités:
EP-A2- 0 330 735    DE-U1-202013 105 253
JP-A- 2009 270 824    US-A- 5 932 807

**Description**

La présente invention concerne le contrôle non destructif de matériaux, et plus précisément la détection et la caractérisation par ultrasons de défauts dans un matériau.

Les ultrasons sont couramment utilisés pour la mise en œuvre de contrôles non destructifs de matériaux. On utilise pour ce faire une sonde ultrasonore placée à la surface du matériau à examiner, qui émet des ondes ultrasonores dans le matériau. Ces ondes se transforment et se propagent dans le matériau dans différentes directions en fonction de sa structure. Le transducteur reçoit une partie de ces ondes propagées, et leur analyse permet de détecter d'éventuels défauts dans le matériau.

La demande de brevet US 2007/0006651 A1 décrit un procédé de contrôle non destructif au moyen d'ondes ultrasonores, basé sur la comparaison de l'amplitude du spectre fréquentiel d'une sélection du signal avec une amplitude de référence. Cette demande mentionne la possibilité d'effectuer les mesures à différentes positions et évoque la combinaison de ces mesures pour obtenir un signal de mesure moyen au sens spatial.

De même, la demande JP 2009-270824 A décrit une méthode de détection et d'estimation de la taille d'un défaut à partir des signaux émis et reçus par un couple émetteur-récepteur ultrasonore parcourant la surface d'un matériau. La caractérisation du défaut est déterminée sur la base de la force du signal mesuré. Le signal est normalisé pour ramener à 1 la valeur du signal en l'absence de défaut, en divisant les signaux relevés par une valeur de référence correspondant à l'absence de défauts. Cette valeur de référence est préalablement déterminée et la même normalisation est appliquée à l'ensemble des signaux relevés. Il s'agit d'une normalisation standard, comme celle appliquée dans le document EP 0 330 735 A2.

Cependant, de tels procédés ne donnent pas entièrement satisfaction, et le signal reste entaché de bruit. De fait, la plupart des pièces inspectées présentent des hétérogénéités de surface, comme par exemple des déformations, des variations de rugosité, accidents de surface, ou des soudures (revêtement notamment), qui peuvent entraîner des variations sensibles de la qualité du couplage acoustique entre la sonde et le matériau à inspecter. Or, la qualité de ce couplage influe directement sur les mesures effectuées et donc sur le résultat de la détection de défauts.

En particulier, pour un matériau hétérogène, c'est-à-dire un matériau polycristallin dont la taille de grain est de l'ordre de la longueur d'onde ultrasonore dans ce matériau, le phénomène de diffusion de l'onde ultrasonore par la structure du matériau devient prépondérant. Cette diffusion peut alors conduire à la génération d'un bruit de structure, c'est-à-dire à un signal ultrasonore d'amplitude non négligeable reçu par la sonde et présentant des caractéristiques semblables à celles qu'émettrait une onde réfléchie par un défaut. Il est alors nécessaire de pouvoir distinguer finement entre le bruit de structure et d'éventuels défauts. Or, des hétérogénéités de surface, par l'atténuation des amplitudes de signaux et les variations qu'elles induisent, peuvent venir gêner cette détection.

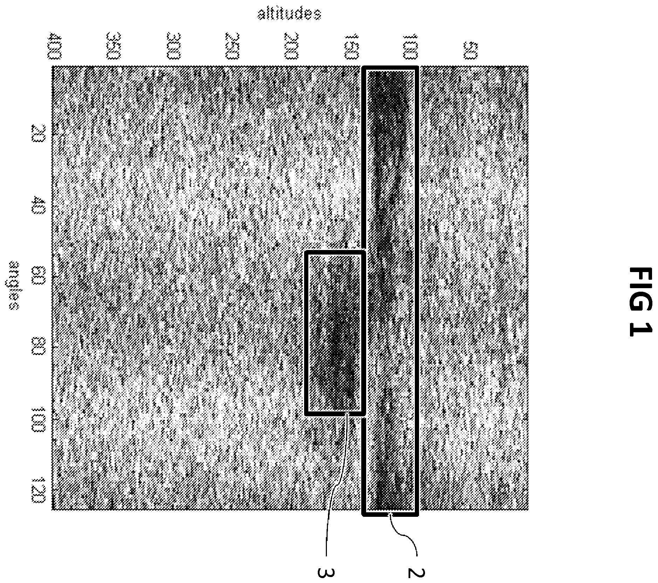

A titre d'exemple illustratif, la figure 1 illustre un exemple de résultats de mesure obtenus sur une portion interne d'un tube métallique, avec une teinte d'autant plus claire des points de mesure que le signal reçu est élevé. Il s'agit d'une carte des valeurs maximales des parties de signaux temporels correspondant aux zones de diffraction desdits signaux temporels, c'est-à-dire aux parties représentatives du bruit de structure. Le matériau est ici exempt de défauts internes, et les motifs présentés par la carte de la figure 1 montrent le bruit de structure, qui est relativement homogène dans le matériau, sauf pour deux anomalies autour desquelles on a placé deux cadres noirs 2, 3. Au niveau de ces anomalies, l'amplitude du signal reçu montre une discontinuité et est sensiblement plus faible que pour le reste de la carte.

Ces deux discontinuités correspondent à des défauts de couplage entre la sonde et le matériau pour ces points de mesure, causés par des inhomogénéités de surface du matériau. Ces défauts de couplage se traduisent dans les mesures par des caractéristiques similaires à celles engendrées par des défauts à l'intérieur du matériau, ce qui vient polluer la détection de défauts ou la rendre impossible.

Plus généralement, les hétérogénéités de surface vont gêner les interprétations des signaux de plusieurs manières:

- les fortes variations d'amplitudes qu'elles induisent peuvent être confondues avec la présence d'un défaut;
- les défauts de couplage, par la faiblesse des amplitudes des ondes émises ou reçues, peuvent masquer des défauts qui ne sont alors pas détectés;
- certaines méthodes de détection des défauts exploitent la constance statistique des signaux, en particulier du bruit de structure, et les faibles amplitudes induites par les défauts de couplage viennent polluer ces statistiques.

PRESENTATION DE L'INVENTION

La présente invention a pour but de proposer un procédé de détection par ultrasons de défauts dans un matériau qui permettent de réduire l'influence des hétérogénéités de surface du matériau sur le couplage entre le transducteur et le matériau, dont les variations entachent les données récoltées.

A cet effet, il est proposé un procédé de détection par ultrasons de défauts dans un matériau sélon la revendication 1, comprenant les étapes suivantes, pour une pluralité de couples de position d'émission et de position de réception:

- émission d'ultrasons à partir d'un transducteur émetteur ultrasonore placé contre le matériau à une position d'émission,
- acquisition, par un transducteur récepteur ultrasonore placé contre le matériau à la position de réception correspondant à ladite position d'émission, d'au moins un signal temporel représentatif de l'amplitude des ultrasons propagés dans le matériau en fonction du temps pendant une durée de mesure à une position de mesure,

caractérisé en ce que le procédé comprend les étapes suivantes :

- pour chaque position de mesure, détermination d'un terme de normalisation de ladite position de mesure à partir des valeurs prises par au moins le signal temporel à ladite position de mesure pendant une partie initiale de la durée de mesure correspondant à la réception d'ondes ultrasonores propagées à la surface du matériau;
- pour chaque position de mesure, normalisation du signal temporel à ladite position de mesure sur la durée de mesure en utilisant le terme de normalisation de ladite position de mesure déterminé à partir dudit signal temporel à ladite position de mesure pour obtenir un signal temporel normalisé,
- traitement de signaux temporels normalisés pour différentes positions de mesure pour détecter des défauts dans le matériau.

Le procédé permet notamment de compenser les variations de la qualité du placage de la sonde. En effet, la détermination du terme de normalisation au début de la mesure (et non préalablement à celle-ci) et pour chaque position, permet d'adapter la normalisation à la configuration d'acquisition de la sonde au moment de la mesure.

L'invention est avantageusement complétée par les caractéristiques suivantes, prises seules ou en une quelconque de leur combinaison techniquement possible:

- les ultrasons sont émis par le transducteur émetteur ultrasonore pendant une durée d'impulsion, et la partie initiale de la durée de mesure correspond à une durée inférieure au temps de propagation des ondes ultrasonores se propageant en surface du matériau entre la position d'émission et la position de réception additionné de deux fois la durée d'impulsion, durée prise à partir du début de l'impulsion;
- le terme de normalisation est déterminé à partir de la puissance temporellement moyenne des valeurs prises par le signal temporel pendant la partie initiale de la durée de mesure correspondant à la réception d'ondes ultrasonores propagées à la surface du matériau;
- pour une position de mesure, le carré du terme de normalisation est proportionnel à la puissance temporellement moyenne des valeurs prises par le signal temporel pendant la partie initiale de la durée de mesure correspondant à la réception d'ondes ultrasonores propagées à la surface du matériau;

- le procédé comprend en outre la détermination des temps de propagation entre la position d'émission et la position de réception correspondante pour les ondes ultrasonores, et dans lequel le terme de normalisation pour une position de mesure est déterminé à partir des temps de propagation à différentes positions de mesures.
- le temps de propagation à une position de mesure peut être déterminé en corrélant le signal temporel à un signal de référence représentatif de la réception d'une onde ultrasonore;
- pour chaque groupement de temps d'une pluralité de groupements de temps de propagation, on détermine la puissance temporellement moyenne, pour les positions de mesure présentant un temps de propagation appartenant audit groupement de temps, des valeurs prises par le signal temporel pendant la partie initiale de la durée de mesure correspondant à la réception d'ondes ultrasonores propagées à la surface du matériau, et
- on détermine le terme de normalisation d'une position de mesure à partir des puissances temporellement moyennes des positions de mesure du groupement de temps de propagation correspondant au temps de propagation présenté par la position de mesure;
- le terme de normalisation d'une position de mesure est déterminé à partir de la moyenne des puissances temporellement moyennes des positions de mesure du groupement de temps de propagation correspondant au temps de propagation présenté par la position de mesure;
- un filtrage spatial correspondant à des positions de mesure réparties sur une portion de surface du matériau est utilisé pour filtrer le terme de normalisation d'une position de mesure appartenant à ladite portion de surface.

L'invention concerne également un système de détection par ultrasons de défauts dans un matériau selon la revendication 10 comprenant :

- un transducteur émetteur ultrasonore adapté pour être placé contre le matériau à une position d'émission et configuré pour émettre des ultrasons ;
- un transducteur récepteur ultrasonore adapté pour être contre le matériau à une position de réception formant avec ladite position d'émission un couple de position d'émission et de position de réception, le transducteur émetteur ultrasonore étant configuré pour acquérir au moins un signal temporel représentatif de l'amplitude des ultrasons propagés dans le matériau en fonction du temps pendant une durée de mesure à une position de mesure ; et un système de traitement automatisé de données comprenant un processeur et une mémoire, adapté pour être utilisé dans le procédé selon l'invention, et configuré pour mettre en œuvre au moins les étapes suivantes :

- pour chaque position de mesure, détermination d'un terme de normalisation de ladite position de mesure à partir des valeurs prises par au moins le signal temporel à ladite position de mesure pendant une partie initiale de la durée de mesure correspondant à la réception d'ondes ultrasonores propagées à la surface du matériau;
- pour chaque position de mesure, normalisation du signal temporel à ladite position de mesure sur la durée de mesure en utilisant le terme de normalisation de ladite position de mesure déterminé à partir dudit signal temporel à ladite position de mesure pour obtenir un signal temporel normalisé,
- traitement de signaux temporels normalisés pour différentes positions de mesure pour détecter des défauts dans le matériau.

L'invention concerne également un produit programme d'ordinateur comprenant des instructions de code de programme pour l'exécution du procédé selon l'invention lorsque ledit programme est exécuté sur un ordinateur.

PRESENTATION DES FIGURES

L'invention sera mieux comprise, grâce à la description ci-après, qui se rapporte à un exemple de réalisation préféré, donné à titre d'exemple non limitatif et expliqué avec référence aux dessins schématiques annexés, dans lesquels:

- la figure 1, déjà discutée, montre une carte illustrant un exemple des valeurs maximales des parties de signaux temporels correspondant aux zones de diffraction desdits signaux temporels pour une pluralité de positions de mesures et mettant en évidence un bruit de structure et des défauts de couplage;
- la figure 2 illustre l'inspection d'un tube par une sonde ultrasonore;
- la figure 3 illustre un exemple de représentation en deux dimensions altitude/temps pour un angle donné, montrant les différentes parties d'un signal temporel de mesure;
- la figure 4 montre une carte de termes de normalisation pour l'exemple de la figure 1 dans un mode de réalisation possible de l'invention;
- la figure 5 montre une carte illustrant les valeurs maximales des signaux temporels normalisés pour une pluralité de positions de mesures dans un mode de réalisation possible de l'invention en reprenant l'exemple de la figure 1;
- la figure 6 montre une carte des temps de propagation pour les ondes ultrasonores reprenant l'exemple de la figure 1;
- la figure 7 montre une carte des termes de normalisation pour l'exemple de la figure 1 dans un mode de réalisation possible de l'invention.

DESCRIPTION DETAILLEE

A des fins d'illustration, la description qui suit sera faite dans le cadre du contrôle non destructif d'un tube en matériau métallique au moyen de transducteurs ultrasonores. D'autres types de surface peuvent être inspectés, et l'invention n'est pas restreinte à un tube. Une telle acquisition des mesures des transducteurs est couramment effectuée, notamment pour la mise en œuvre la technique dite de mesure du temps de trajet de diffraction, plus connue sous l'acronyme TOFD pour l'anglais "time of flight diffraction", dont le protocole d'acquisition de données peut être mis en œuvre pour la présente invention.

A titre d'exemple, la fréquence des ondes ultrasonores généralement utilisées en contrôle non destructif peut s'étendre de 0,1 à 50 MHz, la bande 2-10 MHz étant la plus usitée. La longueur d'onde, dans cette bande, est donc comprise pratiquement, pour des métaux tels que l'acier ou l'aluminium, entre 3 mm et 0,5 mm.

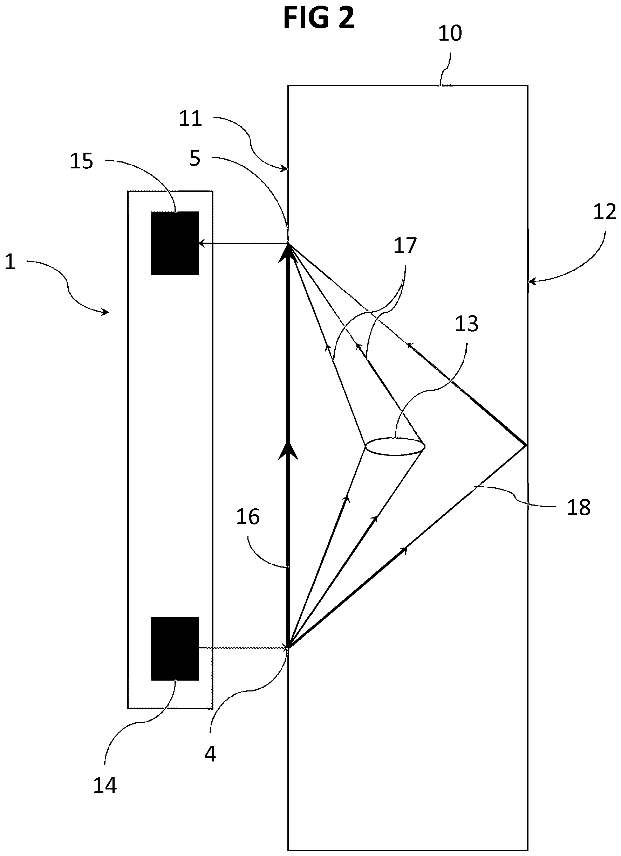

La figure 2 illustre une sonde 1 disposé à la surface 11 d'un tube 10 et inspectant le tube 10 présentant le défaut 13. Le transducteur émetteur 14 et le transducteur récepteur 15 de la sonde 1 sont disposés de sorte d'être alignés dans l'axe longitudinal du tube 10. Ils se trouvent donc dans un plan parallèle audit axe longitudinal du tube 10.

La sonde 1 de déplace à la surface du matériau, et pour chaque position de mesure, émet et reçoit des ondes ultrasonores dont les amplitudes définissent la mesure à cette position de mesure. La position de mesure prise en compte dépend de l'approche considérée. Il peut par exemple s'agir de la position de réception des ondes ultrasonores, de la position d'émission, ou d'une autre position, par exemple un point de la sonde 1 équidistant de la position de réception et de la position d'émission. La définition de la position de mesure influe uniquement sur la correspondance géométrique entre les positions de mesure et le matériau. Passer d'une définition de la position de mesure à une autre revient simplement à translater les mesures par rapport à la surface du tube 10.

Les données ainsi acquises sont définies par une amplitude en fonction du temps liée à chaque position de mesure. En notant $z$ la position de mesure et $x$ l'amplitude des signaux, on note $x(z,t)$ le signal temporel reçu par la sonde pour la position de mesure $z$. Il est à noter que l'exemple donné ici, la position $z$ est définie par une altitude $h$ et un angle $\Theta$. On peut donc également noter x(z,t) = x(h, θ,t). Le pas de l'altitude et de l'angle dépend de la précision recherchée et des caractéristiques dimensionnelles des faisceaux d'émission et de réception des transducteurs. A titre d'exemple, on pourra prendre un pas en altitude compris entre 0,1 et 2 mm, et un pas angulaire compris entre 1 et 3°.

Pour les mesures, on émet des ultrasons à partir du transducteur émetteur ultrasonore 14 placé contre le matériau. La sonde parcourt le tube, et, pour une pluralité de positions d'émission, un tir d'ondes ultrasonores est effectué, prenant généralement la forme d'une impulsion pendant une brève durée d'impulsion. Cette impulsion peut par exemple prendre la forme d'un signal porte ou d'une sinusoïde atténuée. Les ondes ultrasonores émises par le transducteur émetteur 14 pénètrent dans le tube 10 au niveau de sa paroi interne 11, puis se propagent dans le matériau dudit tube 10.

Pour une pluralité de couples de position d'émission et de positions de réception, le procédé selon l'invention comprend ainsi l'émission d'ultrasons à partir du transducteur émetteur ultrasonore 14 placé contre le matériau à une position d'émission, et l'acquisition, par le transducteur récepteur ultrasonore 15 placé contre le matériau à la position de réception correspondant à ladite position d'émission, d'au moins un signal temporel représentatif de l'amplitude des ultrasons propagés dans le matériau en fonction du temps pendant une durée de mesure à une position de mesure.

Le signal temporel prend généralement la forme d'une représentation A, ou A-scan, qui est un signal temporel pour une position de mesure, dont les données sont notées x(h,θ,t) ou x(z,t). D'autres représentations peuvent évidemment être définies, comme par exemple une représentation B avec un signal en deux dimensions angle/temps pour une altitude donnée ou altitude/temps pour un angle donnée.

Une autre représentation sera notamment également utilisée à des fins d'illustration. Il s'agit de la représentation C, ou C-scan, qui est un signal en deux dimension correspondant aux amplitudes maximales (en valeur absolue) mesurées pour chaque position de mesure:

$$y(h, \theta) = \max_t |x(h, \theta, t)|$$

*ou*

$$y(z) = \max_t |x(z, t)|$$

La figure 1 auparavant discutée est par exemple un C-scan.

Les ondes ultrasonores se propagent jusqu'au transducteur récepteur ultrasonore 15. Les ondes reçues par le transducteur récepteur ultrasonore 15 peuvent prendre plusieurs trajets, comme illustré sur la figure 2.

Un premier trajet 16 correspond au chemin le plus court pour les ondes ultrasonores, qui correspond ici à la surface du matériau entre le transducteur émetteur ultrasonore 14 et le transducteur récepteur ultrasonore 15. On parle alors d'ondes latérales pour les ondes ultrasonores propagées en surface du matériau.

D'autres trajets 17 constituent d'autres chemins pour les ondes ultrasonores à l'intérieur du matériau, qui sont diffractées par le défaut 13 en direction du transducteur récepteur 15. Enfin, le trajet le plus long 18 constitue le chemin long pour les ondes ultrasonores, qui sont réfléchies en direction du transducteur récepteur 15 par la surface opposée du matériau, en l'occurrence ici la paroi externe 12 du tube 10.

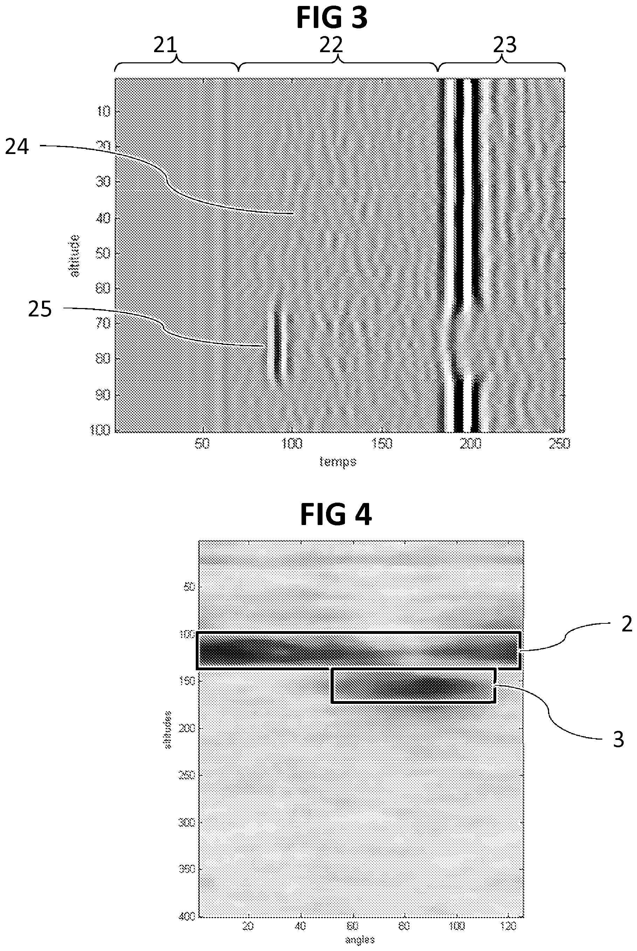

Ces différents trajets se traduisent sur le signal temporel A-scan par différentes zones qui peuvent être identifiées. Afin d'illustrer cet effet, la figure 3 montre un B-scan altitude/temps pour un angle donné.

Sur cette figure 3, on peut identifier une première zone 21 correspondant à la réception des ondes ultrasonores s'étant propagées à la surface du matériau. Il s'agit de la partie initiale de la durée de mesure puisque ces ondes ont emprunté le plus court trajet 16 entre le transducteur émetteur ultrasonore et le transducteur récepteur ultrasonore. Une onde ultrasonore propagée à la surface du matériau peut ainsi être désignée comme une onde latérale. Sur la figure 3, cette partie initiale correspondant à l'onde latérale se situe dans les soixante premiers pas de temps.

Une deuxième zone 22 correspond à la réception des ondes ultrasonores s'étant propagées à l'intérieur de la surface du matériau et qui ont été diffractées par le matériau, et en particulier par les défauts et hétérogénéités à l'intérieur de celui-ci. On parle de zone de diffraction. C'est cette deuxième zone 22 qui est principalement utilisée pour détecter les défauts à l'intérieur du matériau.

On constate d'ailleurs qu'à l'intérieur de cette zone de diffraction 22 on trouve par exemple des portions représentatives d'un bruit de structure 24, ou des portions représentatives de défauts 25.

La troisième zone 23 correspond à l'écho de fond, et est donc constituée des ondes ultrasonores qui ont été réfléchies par la surface externe 12. Il s'agit des ondes ayant emprunté le trajet le plus long 18, et qui se trouvent donc logiquement à la fin de la mesure, après le 180ème pas de temps.

L'invention propose d'exploiter les valeurs prises par les signaux temporels pendant une partie initiale de la durée de mesure correspondant à la réception d'ondes ultrasonores propagées à la surface du matériau afin de normaliser chaque signal temporel dans sa globalité, pour compenser l'influence des hétérogénéité de surface.

A cet effet, il est proposé pour chaque position de mesure, de déterminer un terme de normalisation à partir des valeurs prises par au moins le signal temporel à la position de mesure pendant une partie initiale de la durée de mesure correspondant à la réception d'ondes ultrasonores propagées à la surface du matériau, puis de normaliser le signal temporel sur la durée de mesure en utilisant le terme de normalisation pour obtenir un signal temporel normalisé. De préférence, le terme de normalisation est déterminé à partir des valeurs prises par des signaux temporels d'une pluralité de positions de mesure.

On peut définir la partie initiale de la durée de mesure comme regroupant les données acquises au début de la mesure jusqu'à l'acquisition des mesures des ondes latérales y compris. On y retrouve donc les mesures des ondes latérales, mais éventuellement d'autres mesures telles que les ondes ultrasonores propagées par le trajet le plus court, qui peuvent différer des ondes latérales. En effet, lorsque la surface du matériau est plane, comme sur l'exemple de la figure 2, les ondes ultrasonores propagées par le trajet le plus court dans le matériau sont les ondes se propageant en surface du matériau. Il en va de même pour une surface concave.

En revanche, pour une surface convexe, des ondes ultrasonores se propageant directement dans le matériau entre la position d'émission et la position de réception arrivent avant les ondes ultrasonores se propageant en surface du matériau. Ces ondes ultrasonores se propageant par un trajet direct sont également mesurée lors de la partie initiale. Dans ce cas, la partie initiale de la durée de mesure correspondant à la réception d'ondes ultrasonores propagées à la surface du matériau recouvre non seulement ladite réception d'ondes ultrasonores propagées à la surface du matériau, mais également la réception antérieure des ondes ultrasonores propagées par le trajet direct.

La partie initiale s'étend jusqu'au temps mis par les ondes ultrasonores pour se propager en surface du matériau entre la position d'émission 4 et la position de réception 5. La partie initiale peut ainsi par exemple correspondre à une durée inférieure au temps de propagation des ondes ultrasonores se propageant en surface du matériau entre la position d'émission 4 et la position de réception 5, additionné de deux fois la durée d'émission, afin de s'assurer que toutes les ondes latérales ont bien été reçues. La durée est prise à partir du début de l'émission. On pourra par ailleurs s'appuyer sur des mesures effectuées pour définir la limite retenue pour cette partie initiale, comme par exemple sur la figure 3, où cette durée initiale correspond environ aux 60 premiers pas de temps.

On utilise ainsi, pour normaliser un signal temporel, non pas les signaux temporels dans leur entièreté, mais uniquement les portions des signaux temporels correspondant à la partie initiale de la durée de mesure correspondant à la réception d'ondes ultrasonores propagées à la surface du matériau, c'est-à-dire à la réception des ondes latérales. Les termes de normalisation ne sont pas déterminés à partir des portions suivantes des signaux temporels. En particulier, les termes de normalisation ne sont pas déterminés à partir des parties de la durée de mesure correspondant à la réception d'ondes ultrasonores dont le chemin de propagation est plus long que la propagation à la surface du matériau.

On peut donc par exemple prévoir une étape préalable de sélection ou d'extraction de la portion des signaux temporels correspondant à la partie initiale de la durée de mesure, en supprimant des données exploitées pour cette normalisation les mesures qui suivent temporellement la réception d'ondes ultrasonores propagées à la surface du matériau, c'est-à-dire à la réception des ondes latérales.

Le terme de normalisation peut être déterminé à partir de la puissance temporellement moyenne des valeurs prises par le signal temporel pendant la partie initiale de la durée de mesure correspondant à la réception d'ondes ultrasonores propagées à la surface du matériau. Par exemple, pour une position de mesure, le carré du terme de normalisation peut être proportionnel à la puissance temporellement moyenne des valeurs prises par le signal temporel pendant la partie initiale de la durée de mesure correspondant à la réception d'ondes ultrasonores propagées à la surface du matériau.

En notant $C(z)$ le terme de normalisation pour une position de mesure z, on a donc par exemple:

$$C^2(z) \propto \frac{1}{N_{\text{onde latérale}}} \sum_{t \in \text{onde latérale}} x^2(z,t)$$

avec $N_{\text{onde}}$ latérale le nombre de mesures appartenant à la partie initiale de la durée de mesure correspondant à la réception d'ondes ultrasonores propagées à la surface du matériau.

Il est à noter que la puissance temporellement moyenne de l'onde latérale $P_{OL}(z)$ correspond à:

$$P_{OL}(z) = \frac{1}{N_{\text{onde latérale}}} \sum_{t \in \text{onde latérale}} x^2(z,t)$$

Bien qu'un tel terme de normalisation déterminé à partir de la puissance temporellement moyenne des valeurs d'amplitude puisse être utilisé pour normaliser directement le signal temporel de la position de mesure correspondante, une variabilité relativement forte de ce terme de normalisation peut être constatée, en particulier à cause du bruit de structure.

Ainsi, de préférence, le terme de normalisation est déterminé à partir des valeurs prises par des signaux temporels d'une pluralité de positions de mesure. Un filtrage spatial correspondant à des positions de mesure réparties sur une portion de surface du matériau peut être utilisé pour filtrer le terme de normalisation d'une position de mesure appartenant à ladite portion de surface. On applique ainsi par exemple un filtre spatial médian, i.e. construit à partir de la médiane des valeurs considérées, sous forme de fenêtre glissante. La moyenne pourrait également être utilisée, mais le médian est préféré à la moyenne pour éviter de lisser d'éventuelles brusques variations de plaquage. La fenêtre du filtre doit être suffisamment grande pour diminuer sensiblement le bruit, et suffisamment petite pour ne pas masquer des petites variations locales de plaquage. On peut par exemple prendre une fenêtre d'une taille comprise entre 5 mm et 20 mm et entre 15 degrés et 35 degrés (pour un tube, avec les pas mentionnés plus haut).

La figure 4 montre une carte des termes de normalisations obtenus de cette manière pour l'exemple de la figure 1, avec en sombre les valeurs les plus faibles et en clair les valeurs les plus élevées. On y retrouve, dans les encadrements en noir 2, 3, les zones où les hétérogénéités de surface entraînent un défaut de couplage. Les valeurs faibles prises par les termes de normalisation dans ces zones, et à l'inverse, les valeurs plus élevées des termes de normalisation, permettent de compenser la faible amplitude des signaux temporels affectés par les défauts de couplage. Ces termes de normalisation peuvent être utilisés pour normaliser les signaux temporels A-scan, par exemple en divisant les valeurs de ceux-ci par les termes de normalisation.

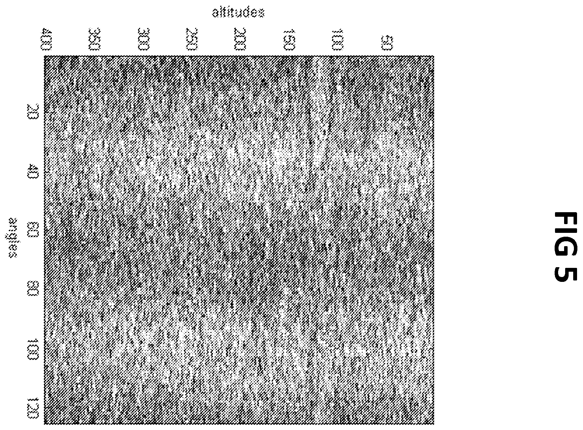

La figure 5 est un C-scan montrant le résultat de la normalisation des A-scan utilisés pour la figure 1 par les termes de normalisation déterminés comme dans l'exemple suite à leur filtrage spatial, restreints à la partie correspondant à la zone de diffraction, et donc représentative du bruit de structure. On constate la forte atténuation des irrégularités dues aux défauts de couplage, qui avaient été repérées par les encadrements noirs 2, 3 dans la figure 1.

On peut également, pour déterminer le terme de normalisation pour une position de mesure, utiliser le temps de propagation des ondes ultrasonores correspondant à ladite position de mesure. On utilise encore ici les signaux temporels d'une pluralité de positions de mesure pendant la partie initiale de la durée de mesure correspondant à la réception des ondes ultrasonores propagées à la surface du matériau.

A cet effet, on détermine les temps de propagation entre la position d'émission 4 et la position de réception 5 correspondante pour les ondes ultrasonores pour chaque position de mesure. Le temps de propagation à une position de mesure peut être déterminé en corrélant le signal temporel à un signal de référence représentatif de la réception d'une onde ultrasonore propagée selon le trajet le plus court dans la zone inspectée. Ce trajet peut par exemple être en surface du matériau, auquel cas le signal de référence est représentatif de la réception d'une onde ultrasonore propagée en surface, ou bien être un trajet direct dans le matériau, notamment si la surface est convexe, auquel cas le signal de référence est représentatif de la réception d'une onde ultrasonore propagée par ce trajet direct.

Ce signal de référence peut par exemple être un signal théorique idéal, ou calculé par simulation. Il est également possible de le définir empiriquement à partir d'un ensemble de mesures correspondant à la réception d'ondes latérales. On peut par exemple prendre les valeurs spatialement moyennes d'un ensemble de mesures de réception d'ondes ultrasonores préalablement acquises afin de définir le signal de référence.

Le pic de corrélation correspond à la réception d'une onde ultrasonore, et permet donc, connaissant le moment de l"impulsion d'émission de l'onde ultrasonore, de déterminer le temps de propagation de cette onde ultrasonore. Outre le moment de l'impulsion d'émission, toute autre référence temporelle fixe par rapport au moment de l'impulsion d'émission peut être utilisée. Cette référence peut notamment être le début de la durée de mesure si la position temporelle de celle-ci est figée par rapport au moment de l"impulsion d'émission.

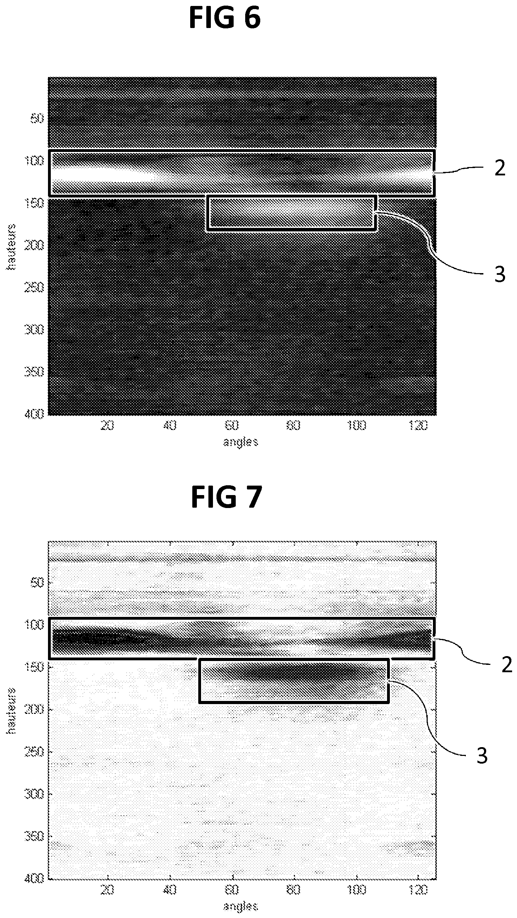

La figure 6 montre ainsi une carte de temps de propagation établie pour l'exemple illustré par la figure 1, avec en sombre les temps de parcours les plus courts et en clair les temps de parcours les plus longs. On y retrouve, dans des encadrements en noirs 2, 3, les zones où les hétérogénéités de surface entraînent un défaut de couplage. On remarque donc que les hétérogénéités de surface peuvent être mises en évidence au moyen des temps de propagation, et qu'il est donc possible d'exploiter ceux-ci pour normaliser les signaux temporels afin de compenser l'influence des défauts de couplage.

A titre d'exemple, on peut utiliser une relation entre le temps de propagation de l'onde latérale et la puissance reçue via l'onde latérale pour déterminer le terme de normalisation. On peut ainsi construire le terme de normalisation C(z) pour la position de mesure z à partir de la puissance temporellement moyenne de l'onde latérale.

Plus précisément :

- pour chaque groupement de temps d'une pluralité de groupements de temps de propagation, on détermine la puissance temporellement moyenne, pour les positions de mesure présentant un temps de propagation appartenant audit groupement de temps, des valeurs prises par le signal temporel pendant la partie initiale de la durée de mesure correspondant à la réception d'ondes ultrasonores propagées à la surface du matériau, et

- on détermine le terme de normalisation d'une position de mesure à partir des puissances temporellement moyennes des positions de mesure du groupement de temps de propagation correspondant au temps de propagation présenté par la position de mesure.

En particulier, le terme de normalisation d'une position de mesure peut être déterminé à partir de la moyenne des puissances temporellement moyennes des positions de mesure du groupement de temps de propagation correspondant au temps de propagation présenté par la position de mesure.

On obtient ainsi d'abord une puissance temporellement moyenne corrigée qui associe une puissance moyenne à chaque groupement de temps:

$$P_{\text{OL,corrigée}}(t) = \frac{1}{N_t} \sum_{z\,|\,t_{\text{OL}}(z)=t} P_{\text{OL}}(z)$$

où $N_t$ est le nombre de positions de mesure pour lesquelles le temps de propagation de l'onde latérale appartient au groupement de mesure du temps t, et où

$$P_{OL}(z) = \frac{1}{N_{\text{onde latérale}}} \sum_{t\in\text{onde latérale}} x^2\,(z,t)$$

La puissance temporellement moyenne corrigée $P_{\text{OL, corrigée}}$ est ensuite utilisée pour déterminer le terme de normalisation C(z):

$$C(\boldsymbol{z}) = \sqrt{P_{\text{OL,corrigée}}(t\,|\,t_{\text{OL}}(\boldsymbol{z}) = t)}$$

La figure 7 montre une carte des termes de normalisations obtenus de cette manière pour l'exemple de la figure 1, avec en sombre les valeurs les plus faibles et en clair les valeurs les plus élevées. On y retrouve, dans les encadrements en noir 2, 3, les zones où les hétérogénéités de surface entraînent un défaut de couplage, qui avaient déjà été mis en évidence avec la carte des temps de propagation illustrée par la figure 6. Les valeurs faibles prises par les termes de normalisation dans ces zones, et à l'inverse, les valeurs plus élevées des termes de normalisation ailleurs, permettent de compenser la faible amplitude des signaux temporels affectés par les défauts de couplage.

Comme précédemment, ces termes de normalisation peuvent être utilisés pour normaliser les signaux temporels A-scan, par exemple en divisant les valeurs de ceux-ci par les termes de normalisation.

Par ailleurs, comme précédemment, il est possible de mettre en œuvre un filtrage spatial correspondant à des positions de mesure réparties sur une portion de surface du matériau pour filtrer le terme de normalisation d'une position de mesure appartenant à ladite portion de surface.

Une fois le signal temporel normalisé, une méthode connue de détection des défauts peut alors être mise en œuvre, par exemple en comparant les valeurs normalisées à des seuils ou en utilisant des méthodes plus élaborée permettant non seulement de détecter les défauts, mais également de caractériser ceux-ci.

On peut notamment construire une des représentations évoquées, typiquement un C-scan, à partir des signaux temporels normalisés restreints à la zone de diffraction, c'est-à-dire à la durée de mesure correspondant à la réception d'ondes ultrasonores propagées à l'intérieur du matériau, hors ondes latérales ou écho de fond, puis à partir de cette représentation détecter les défauts par une analyse des variations des valeurs de cette représentation.

Le procédé décrit est typiquement mis en œuvre par un ordinateur pourvu d'un processeur et d'une mémoire. A cet effet, il est proposé un produit programme d'ordinateur comprenant des instructions de code de programme pour l'exécution du procédé selon l'invention lorsque ledit programme est exécuté sur un ordinateur.

L'invention n'est pas limitée au mode de réalisation décrit et représenté aux figures annexées. Des modifications restent possibles, notamment du point de vue de la constitution des divers éléments ou par substitution d'équivalents techniques, sans sortir pour autant du domaine de protection de l'invention.

## Revendications

1.  Procédé de détection par ultrasons de défauts dans un matériau, comprenant les étapes suivantes, pour une pluralité de couples de position d'émission et de position de réception:

    - émission d'ultrasons à partir d'un transducteur émetteur ultrasonore (14) placé contre le matériau à une position d'émission (4),
    - acquisition, par un transducteur récepteur ultrasonore (15) placé contre le matériau à la position de réception (5) correspondant à ladite position d'émission, d'au moins un signal temporel représentatif de l'amplitude des ultrasons propagés dans le matériau en fonction du temps pendant une durée de mesure à une position de mesure,

    **caractérisé en ce que** le procédé comprend les étapes suivantes :

    - pour chaque position de mesure, détermination d'un terme de normalisation de ladite position de mesure à partir des valeurs prises par au moins le signal temporel à ladite position de mesure pendant une partie initiale de la durée de mesure correspondant à la réception d'ondes ultrasonores propagées à la surface du matériau;
    - pour chaque position de mesure, normalisation du signal temporel à ladite position de mesure sur la durée de mesure en utilisant le terme de normalisation de ladite position de mesure déterminé à partir d'au moins dudit signal temporel à ladite position de mesure pour obtenir un signal temporel normalisé,
    - traitement de signaux temporels normalisés pour différentes positions de mesure pour détecter des défauts dans le matériau.

2. Procédé selon la revendication 1, dans lequel les ultrasons sont émis par le transducteur émetteur ultrasonore (14) pendant une durée d'impulsion, et la partie initiale de la durée de mesure correspond à une durée inférieure au temps de propagation des ondes ultrasonores se propageant en surface du matériau entre la position d'émission (4) et la position de réception (5) additionné de deux fois la durée d'impulsion, durée prise à partir du début de l'impulsion.

3. Procédé selon l'une des revendications précédentes, dans lequel le terme de normalisation est déterminé à partir de la puissance temporellement moyenne des valeurs prises par le signal temporel pendant la partie initiale de la durée de mesure correspondant à la réception d'ondes ultrasonores propagées à la surface du matériau.

4. Procédé selon la revendication 3, dans lequel pour une position de mesure, le carré du terme de normalisation est proportionnel à la puissance temporellement moyenne des valeurs prises par le signal temporel pendant la partie initiale de la durée de mesure correspondant à la réception d'ondes ultrasonores propagées à la surface du matériau.

5. Procédé selon l'une quelconque des revendications précédentes, comprenant en outre la détermination des temps de propagation entre la position d'émission (4) et la position de réception (5) correspondante pour les ondes ultrasonores, et dans lequel le terme de normalisation pour une position de mesure est déterminé à partir des temps de propagation à différentes positions de mesures.

6. Procédé selon la revendication précédente, dans lequel le temps de propagation à une position de mesure peut être déterminé en corrélant le signal temporel à un signal de référence représentatif de la réception d'une onde ultrasonore.

7. Procédé selon l'une des revendications 5 à 6, dans lequel:

- pour chaque groupement de temps d'une pluralité de groupements de temps de propagation, on détermine la puissance temporellement moyenne, pour les positions de mesure présentant un temps de propagation appartenant audit groupement de temps, des valeurs prises par le signal temporel pendant la partie initiale de la durée de mesure correspondant à la réception d'ondes ultrasonores propagées à la surface du matériau, et

- on détermine le terme de normalisation d'une position de mesure à partir des puissances temporellement moyennes des positions de mesure du groupement de temps de propagation correspondant au temps de propagation présenté par la position de mesure.

8. Procédé selon la revendication précédente, dans lequel le terme de normalisation d'une position de mesure est déterminé à partir de la moyenne des puissances temporellement moyennes des positions de mesure du groupement de temps de propagation correspondant au temps de propagation présenté par la position de mesure.

9. Procédé selon l'une des revendications précédentes, dans lequel un filtrage spatial correspondant à des positions de mesure réparties sur une portion de surface du matériau est utilisé pour filtrer le terme de normalisation d'une position de mesure appartenant à ladite portion de surface.

10. Système de détection par ultrasons de défauts dans un matériau comprenant :

- un transducteur émetteur ultrasonore (14) adapté pour être placé contre le matériau à une position d'émission et configuré pour émettre des ultrasons ;
- un transducteur récepteur ultrasonore (15) adapté pour être contre le matériau à une position de réception (5) formant avec ladite position d'émission un couple de position d'émission et de position de réception, le transducteur émetteur ultrasonore (14) étant configuré pour acquérir au moins un signal temporel représentatif de l'amplitude des ultrasons propagés dans le matériau en fonction du temps pendant une durée de mesure à une position de mesure ; et
- un système de traitement automatisé de données comprenant un processeur et une mémoire, adapté pour être utilisé dans le procédé selon l'une quelconque des revendications précédentes et configuré pour mettre en œuvre au moins les étapes suivantes pour une pluralité de couples de position d'émission et de position de réception :

- pour chaque position de mesure, détermination d'un terme de normalisation de ladite position de mesure à partir des valeurs prises par au moins le signal temporel à ladite position de mesure pendant une partie initiale de la durée de mesure correspondant à la réception d'ondes ultrasonores propagées à la surface du matériau;
- pour chaque position de mesure, normalisation du signal temporel à ladite position de mesure sur la durée de mesure en utilisant le terme de normalisation de ladite position de mesure déterminé à partir au moins dudit signal temporel à ladite position de mesure pour obtenir un signal temporel normalisé,

- traitement de signaux temporels normalisés pour différentes positions de mesure pour détecter des défauts dans le matériau.

11. Produit programme d'ordinateur comprenant des instructions de code de programme pour l'exécution du procédé selon l'une quelconque des revendications 1 à 9 lorsque ledit programme est exécuté sur un ordinateur.

**Patentansprüche**

1. Verfahren zur Detektion von Defekten in einem Material mittels Ultraschall, das für eine Vielzahl von Sendepositions- und Empfangspositions-Paaren die folgenden Schritte umfasst:

- Aussenden von Ultraschall auf Grundlage eines Ultraschall-Sendewandlers (14), der an einer Sendeposition (4) am Material platziert wird,
- Erfassen von mindestens einem Zeitsignal, das für die Amplitude des sich im Material ausbreitenden Ultraschalls in Abhängigkeit von der Zeit während einer Messdauer an einer Messposition repräsentativ ist, mittels eines Ultraschall-Empfangswandlers (15), der an der der Sendeposition entsprechenden Empfangsposition (5) am Material platziert wird,

**dadurch gekennzeichnet, dass** das Verfahren die folgenden Schritte umfasst:

- für jede Messposition, Bestimmen eines Normierungsterms der Messposition auf Grundlage der Werte, die von mindestens dem Zeitsignal an der Messposition während eines Anfangsteils der Messdauer angenommen werden, der dem Empfang von Ultraschallwellen entspricht, die sich an der Oberfläche des Materials ausbreiten;
- für jede Messposition, Normieren des Zeitsignals an der Messposition über die Messdauer unter Verwendung des Normierungsterms der Messposition, der auf Grundlage mindestens des Zeitsignals an der Messposition bestimmt wurde, um ein normiertes Zeitsignal zu erhalten,
- Verarbeiten von normierten Zeitsignalen für unterschiedliche Messpositionen, um Defekte im Material zu detektieren.

2. Verfahren nach Anspruch 1, wobei der Ultraschall vom Ultraschall-Sendewandler (14) während einer Impulsdauer ausgesendet wird, und der Anfangsteil der Messdauer einer Dauer entspricht, die kürzer ist als die Ausbreitungszeit der sich an der Oberfläche des Materials ausbreitenden Ultraschallwellen zwischen der Sendeposition (4) und der Empfangsposition (5) zuzüglich dem Zweifachen der Impulsdauer, wobei die Dauer ab dem Beginn des Impulses genommen wird.

3. Verfahren nach einem der vorstehenden Ansprüche, wobei der Normierungsterm auf Grundlage der zeitlich gemittelten Leistung der Werte bestimmt wird, die vom Zeitsignal während des Anfangsteils der Messdauer angenommen werden, der dem Empfang von sich an der Oberfläche des Materials ausbreitenden Ultraschallwellen entspricht.

4. Verfahren nach Anspruch 3, wobei sich für eine Messposition das Quadrat des Normierungsterms zur zeitlich gemittelten Leistung der Werte, die vom Zeitsignal während des Anfangsteils der Messdauer angenommen werden, der dem Empfang von sich an der Oberfläche des Materials ausbreitenden Ultraschallwellen entspricht, proportional verhält.

5. Verfahren nach einem der vorstehenden Ansprüche, das weiter das Bestimmen der Ausbreitungszeiten zwischen der Sendeposition (4) und der entsprechenden Empfangsposition (5) für die Ultraschallwellen umfasst, und wobei der Normierungsterm für eine Messposition auf Grundlage der Ausbreitungszeiten an unterschiedlichen Messpositionen bestimmt wird.

6. Verfahren nach dem vorstehenden Anspruch, wobei die Ausbreitungszeit an einer Messposition bestimmt werden kann, indem das Zeitsignal mit einem Referenzsignal korreliert wird, das für den Empfang einer Ultraschallwelle repräsentativ ist.

7. Verfahren nach einem der Ansprüche 5 bis 6, wobei:

- für jede Zeitgruppe aus einer Vielzahl von Ausbreitungszeitgruppen die zeitlich gemittelte Leistung für die Messpositionen, die eine zu der Zeitgruppe gehörende Ausbreitungszeit aufweisen, der Werte bestimmt wird, die vom Zeitsignal während des Anfangsteils der Messdauer angenommen werden, der dem Empfang von sich an der Oberfläche des Materials ausbreitenden Ultraschallwellen entspricht, und
- der Normierungsterm einer Messposition auf Grundlage der zeitlich gemittelten Leistungen der Messpositionen der Ausbreitungszeitgruppe bestimmt wird, die der von der Messposition aufgewiesenen Ausbreitungszeit entspricht.

**8.** Verfahren nach dem vorstehenden Anspruch, wobei der Normierungsterm einer Messposition auf Grundlage des Mittelwerts der zeitlich gemittelten Leistungen der Messpositionen der Ausbreitungszeitgruppe bestimmt wird, die der von der Messposition aufgewiesenen Ausbreitungszeit entspricht.

**9.** Verfahren nach einem der vorstehenden Ansprüche, wobei eine räumliche Filterung, die an einem Oberflächenabschnitt des Materials verteilten Messpositionen entspricht, verwendet wird, um den Normierungsterm einer zu dem Oberflächenabschnitt gehörenden Messposition zu filtern.

**10.** System zur Detektion von Defekten in einem Material mittels Ultraschall, umfassend:

- einen Ultraschall-Sendewandler (14), der dafür geeignet ist, an einer Sendeposition am Material platziert zu werden, und so konfiguriert ist, dass er Ultraschall aussendet;
- einen Ultraschall-Empfangswandler (15), der dafür geeignet ist, sich an einer Empfangsposition (5), die mit der Sendeposition ein Sendepositions- und Empfangspositions-Paar bildet, am Material zu befinden, wobei der Ultraschall-Sendewandler (14) so konfiguriert ist, dass er mindestens ein Zeitsignal erfasst, das für die Amplitude des sich im Material ausbreiteten Ultraschalls in Abhängigkeit von der Zeit während einer Messdauer an einer Messposition repräsentativ ist; und
- ein automatisiertes Datenverarbeitungssystem, das einen Prozessor und einen Speicher umfasst, das dafür geeignet ist, im Verfahren nach einem der vorstehenden Ansprüche verwendet zu werden, und so konfiguriert ist, dass es für eine Vielzahl von Sendepositions- und Empfangspositions-Paaren mindestens die folgenden Schritte umsetzt:

- für jede Messposition, Bestimmen eines Normierungsterms der Messposition auf Grundlage der Werte, die von mindestens dem Zeitsignal an der Messposition während eines Anfangsteils der Messdauer angenommen werden, der dem Empfang von Ultraschallwellen entspricht, die sich an der Oberfläche des Materials ausbreiten;
- für jede Messposition, Normieren des Zeitsignals an der Messposition über die Messdauer unter Verwendung des Normierungsterms der Messposition, der auf Grundlage mindestens des Zeitsignals an der Messposition bestimmt wurde, um ein normiertes Zeitsignal zu erhalten,
- Verarbeiten von normierten Zeitsignalen für unterschiedliche Messpositionen, um Defekte im Material zu detektieren.

**11.** Computerprogrammprodukt, das Programmcodeanweisungen für die Ausführung des Verfahrens nach einem der Ansprüche 1 bis 9 umfasst, wenn das Programm auf einem Computer ausgeführt wird.

## Claims

**1.** Method of ultrasound detection of defects in a material, comprising the following steps, for a plurality of pairs of emission position and reception position:

- emission of ultrasounds from an ultrasonic emitting transducer (14) placed against the material at an emission position (4),
- acquisition, by an ultrasonic receiving transducer (15) placed against the material in the reception position (5) corresponding to said emission position, of at least one time signal representative of the amplitude of the ultrasounds propagated in the material over time during a measurement duration at a measurement position,

**characterised in that** the method includes the following steps:

- for each measurement position, determination of a normalisation term of said measurement position using the values taken by at least the time signal in said measurement position during an initial portion of the measurement duration corresponding to the reception of ultrasonic waves propagated at the surface of the material;
- for each measurement position, normalisation of the time signal at said measurement position in relation to measurement duration using the normalisation term of said measurement position determined from the at least one time signal at said measurement position to obtain a normalised time signal,
- processing of normalised time signals for different measurement positions to detect defects in the material.

**2.** Method according to claim 1, wherein the ultrasounds are emitted by the ultrasonic emitting transducer (14) during a pulse duration, and the initial portion of the measurement duration is a duration shorter than the propagation time of the ultrasonic waves propagating at the surface of the material between the emission position (4) and the reception position (5) with twice the pulse duration added, where the duration is measured from the start of the pulse.

**3.** Method according to one of the previous claims, wherein the normalisation term is determined from the temporally average power of the values taken by the time signal during the initial portion of the measurement duration corresponding to the reception of ultrasonic waves propagated at the surface of the material.

**4.** Method according to claim 3, wherein, for a measurement position, the square of the normalisation term is proportional to the temporally average power of the values taken by the time signal during the initial portion of the measurement duration corresponding to the reception of ultrasonic waves propagated at the surface of the material.

**5.** Method according to any of the previous claims, also including the determination of the propagation times between the emission position (4) and the corresponding reception position (5) for ultrasonic waves, and wherein the normalisation term for a measurement position is determined from the propagation times at different measurement positions.

**6.** Method according to the previous claim, wherein the propagation time at a measurement position can be determined by correlating the time signal with a reference signal representative of the reception of an ultrasonic wave.

**7.** Method according to either of claims 5 or 6, wherein:

- for each time grouping of a plurality of propagation time groupings the temporally average power is determined, for measurement positions with a propagation time belonging to said time grouping, of the values taken by the time signal during the initial portion of the measurement duration corresponding to the reception of ultrasonic waves propagated at the surface of the material, and
- the normalisation term of a measurement position is determined from the temporally average powers of the measurement positions of the propagation time grouping corresponding to the propagation time of the measurement position.

**8.** Method according to the previous claim, wherein the normalisation term of a measurement position is determined from the average of the temporally average powers of the measurement positions of the propagation time grouping corresponding to the propagation time of the measurement position.

**9.** Method according to one of the previous claims, wherein spatial filtering corresponding to measurement positions distributed over a surface portion of the material is used to filter the normalisation term of a measurement position belonging to said surface portion.

**10.** System of ultrasound detection of defects in a material comprising:

- ultrasonic emitting transducer (14) adapted to be placed against the material at an emission position and configured to emit ultrasounds;
- ultrasonic receiving transducer (15) suitable for being against the material in a reception position (5) forming with said emission position a pair of emission position and reception position, the ultrasonic emitting transducer (14) being configured to acquire at least one time signal representative of the amplitude of the ultrasounds propagated in the material over time during a measurement duration at a measurement position; and
- a system for automated data processing including a processor and a memory, adapted for use in the method according to any of the previous claims and configured to implement at least the following steps for a plurality of pairs of emission position and reception position:

- for each measurement position, determination of a normalisation term of said measurement position using the values taken by at least the time signal in said measurement position during an initial portion of the measurement duration corresponding to the reception of ultrasonic waves propagated at the surface of the material;
- for each measurement position, normalisation of the time signal at said measurement position in relation to measurement duration using the normalisation term of said measurement position determined from the at least one time signal at said measurement position to obtain a normalised time signal,
- processing of normalised time signals for different measurement positions to detect defects in the material.

**11.** Computer program product including program code instructions for execution of the method according to any of claims 1 to 9 when said program is executed on a computer.

# FIG 1

# FIG 2

# FIG 3

# FIG 4

# FIG 5

# FIG 6

# FIG 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20070006651 A1
- JP 2009270824 A
- EP 0330735 A2